# EUROPÄISCHE PATENTSCHRIFT

(11) **EP 2 191 165 B1**
(45) Veröffentlichungstag und Bekanntmachung des Hinweises auf die Patenterteilung: **29.06.2011**
(21) Anmeldenummer: 08803360.0
(22) Anmeldetag: 29.08.2008
(51) Int. Cl.: F16F 9/512

(54) **SCHWINGUNGSDÄMPFER MIT AMPLITUDENABHÄNGIGER DÄMPFKRAFT**
VIBRATION DAMPER HAVING AMPLITUDE-DEPENDANT DAMPING FORCE
AMORTISSEUR DE VIBRATIONS À FORCE DÉPENDANT DE L'AMPLITUDE

(30) Priorität: 21.09.2007 DE 102007045244
(43) Veröffentlichungstag der Anmeldung: 02.06.2010
(73) Patentinhaber: ZF Friedrichshafen AG, 88038 Friedrichshafen (DE)
(72) Erfinder: DENKEL, Michael, 97464 Niederwerrn (DE); MOLLER, Robert, 97491 Aidhausen (DE); POHL, Bernd, 97469 Gochsheim (DE); STRACK, Simon, 96120 Bischberg (DE)
(86) Internationale Anmeldenummer: PCT/EP2008/061361
(87) Internationale Veröffentlichungsnummer: WO 2009/040209

(56) Entgegenhaltungen:
- EP-A- 1 152 166
- EP-A- 1 724 492
- DE-A1-102004 013 881
- DE-A1-102004 043 925
- DE-B3- 10 236 963
- DE-B4- 10 351 353
- US-A- 4 874 066

## Beschreibung

### Technisches Gebiet

Die Erfindung betrifft einen Schwingungsdämpfer mit amplitudenabhängiger Dämpfkraft gemäß dem Oberbegriff von Patentanspruch 1.

### Stand der Technik

Die EP 1 152 166 A1 beschreibt einen Schwingungsdämpfer mit amplitudenabhängiger Dämpfkraft, der ein Gehäuse aufweist, das über Strömungsverbindungen an Arbeitsräume angeschlossen ist, die durch einen Kolben an einer Kolbenstange getrennt sind. Innerhalb des Gehäuses ist ein axial verschiebbarer Trennkolben angeordnet, so dass jeweils eine Arbeitskammer des Gehäuses mit einem Arbeitsraum innerhalb des Schwingungsdämpfers verbunden ist. Bei einer Kolbenstangenbewegung füllt sich eine der Arbeitskammern, wie sich im Gegenzug die andere Arbeitskammer im Gehäuse leert. Spätestens am Ende des Verschiebewegs des Trennkolbens öffnen zusätzliche Ventile innerhalb des Schwingungsdämpfers. In der EP 1 152 166 A1 wird detailliert beschrieben, dass der Trennkolben am äußeren Umfang abgedichtet ist. Bei einer hohen Kolbenstangengeschwindigkeit füllt bzw. entleert sich jeweils eine der Arbeitskammern in dem Gehäuse unter dem Differenzdruck zwischen den beiden Arbeitskammern mit einer hohen Geschwindigkeit, die dazu führt, dass der Trennkolben unter Geräuschbildung an den beiden Deckelflächen des Gehäuses anschlägt.

Zur Geräuschvermeidung wird in der dem Oberbegriff entsprechenden DE 103 51 353 B4 ein Trennkolben vorgeschlagen, der mit einem Elastomerkörper bestückt ist. Der Elastomerkörper überragt die Deckfläche des Trennkolbens und sorgt damit für einen abgefederten Kontakt mit den Deckelflächen.

Des Weiteren offenbart die DE 103 51 353 B4 in der Fig. 4 ein Ausführungsbeispiel, bei dem der Trennkolben mit einem Dorn versehen ist, der mit einer Strömungsverbindung eine Art Nadelventil bildet und mit Annäherung des Trennkolbens an die Endlage eine Drosselwirkung bewirkt. Die axiale Ausdehnung des Dorns stellt bei einem vorgegebenen Bauraum eine Verlustlänge für den Verschiebeweg des Trennkolbens dar.

### Darstellung der Erfindung

Aufgabe der vorliegenden Erfindung ist es, die Arbeitsbewegung des Trennkolbens in dem Gehäuse für die amplitudenabhängige Dämpfung zu optimieren.

Erfindungsgemäß wird die Aufgabe dadurch gelöst, dass zwischen den beiden Arbeitskammern des Gehäuses eine Bypassverbindung vorliegt, die von dem Trennkolben gesteuert wird.

Es liegt eine wegabhängige Steuerung der Bypassverbindung vor, die einen wesentlichen Einfluss auf das Betriebsverhalten des Trennkolbens bewirkt.

Weiterbildungen der Erfindung werden in den abhängigen Ansprüchen angegeben.

Im Hinblick auf eine möglichst einfache Herstellung der Bypassverbindung wird diese von mindestens einer Nut innerhalb eines Kontaktbereichs zwischen dem Trennkolben und dem Gehäuse gebildet.

So ist vorgesehen, dass die Nut innerhalb der Innenwandung des Gehäuses ausgeführt ist.

Durch die Lage der Nut innerhalb des Gehäuses kann man im Detail das Betriebsverhalten des Trennkolbens variieren. Ist z. B. die mindestens eine Nut im Bereich einer Mittellage des Trennkolbens ausgeführt, dann kann bei einer Kolbenstangenbewegung ein Teil des Dämpfmediums den Trennkolben über die Bypassverbindung passieren, so dass bezogen auf einen Verschiebeweg der Kolbenstange ein kleinerer Volumenanteil von der sich vergrößernden Arbeitskammer aufgenommen werden muss. Praktisch wird dadurch der nutzbare Verschiebeweg des Trennkolbens gespreizt.

Bei einer Alternativlösung ist die mindestens eine Nut im Endlagenbereich des Trennkolbens ausgeführt. Damit wird auf ganz einfache Art erreicht, dass am Trennkolben ein geringerer Differenzdruck zwischen den beiden Arbeitskammern vorliegt, der wiederum zu einer Verlangsamung der Trennkolbenbewegung führt. Geräusche treten dann nicht mehr auf.

### Kurze Beschreibung der Zeichnungen

Anhand der folgenden Figurenbeschreibung soll die Erfindung näher erläutert werden.

Es zeigt:
- Fig. 1: Schwingungsdämpfer mit einer Bypassnut in einer Mittellage des Trennkol- bens
- Fig. 2: Schwingungsdämpfer mit Bypassnuten im Endlagenbereich des Trennkol- bens

### Bester Weg zur Ausführung der Erfindung

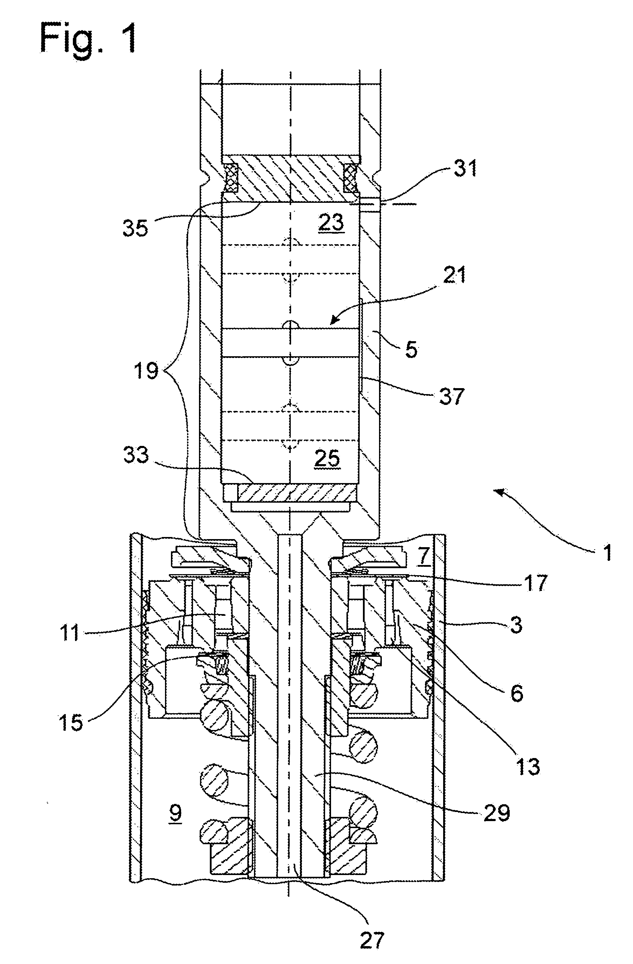

Die Fig. 1 zeigt einen Ausschnitt aus einem Schwingungsdämpfer 1, in dessen mit einem Dämpfmedium gefülltem Zylinder 3 eine Kolbenstange 5 axial beweglich geführt ist. Ein Kolben 6 unterteilt den Zylinder in einen kolbenstangenseitigen und einen kolbenstangenfernen Arbeitsraum 7; 9, wobei für jeweils eine Bewegungsrichtung der Kolbenstange ein Dämpfventil, in diesem Fall Durchtrittsquerschnitte 11; 13, die endseitig zumindest teilweise von mindestens einer Ventilscheibe 15; 17 abgedeckt werden.

Innerhalb der Kolbenstange 5 ist ein Gehäuse 19 ausgeführt, in dem ein Trennkolben 21 axial beweglich angeordnet ist. Der Trennkolben unterteilt das Gehäuse 19 in zwei ebenfalls mit dem Dämpfmedium gefüllte Arbeitskammern 23; 25. Die untere Arbeitskammer 25 ist über eine Strömungsverbindung 27 in der Bauform eines Axialkanals innerhalb eines Kolbenstangenzapfens 29 mit dem kolbenstangenfernen Arbeitsraum 9 verbunden. Zwischen dem kolbenstangenseitigen Arbeitsaum 7 und der oberen Arbeitskammer 23 besteht als Strömungsverbindung eine Anschlussöffnung 31. Über die Strömungsverbindung und die Anschlussöffnung werden Volumenänderungen der beiden Arbeitskammern 23; 25 in Grenzen ausgeglichen, so dass beide Arbeitskammern permanent mit Dämpfmedium gefüllt sind. Zwischen den beiden Arbeitskammern 23; 25 besteht eine Bypassverbindung 37, die im Kontaktbereich zwischen dem Trennkolben, in dieser Ausführung durch eine Nut in einer Innenwandung des Gehäuses 19 gebildet wird.

Bei einer Kolbenstangenbewegung und einem in seiner Ausgangslage mittigen Position des Trennkolbens bewegt sich der Trennkolben noch innerhalb der Nut 37, z. B. in Richtung des Deckels 35. Ein Teil des von der Kolbenstange verdrängten Dämpfmediums wird jedoch nicht von der Arbeitskammer 25 aufgenommen, sondern über die Bypassverbindung in die Arbeitskammer 23 und weiter über die Anschlussöffnung 31 in den oberen Arbeitsraum 7 gefördert. In Abhängigkeit der Druckdifferenz zwischen den beiden Arbeitskammern bewegt sich der Trennkolben mehr oder weniger schnell. Hat der Trennkolben die Nut 37 passiert und damit verschlossen, wie gestrichelt dargestellt, dann verkleinert sich die Arbeitskammer 23 im selben Maß, wie sich die Arbeitskammer 25 axial ausdehnt.

Der Trennkolben steuert die Bypassverbindung, wodurch bei dieser Variante im Bereich der Bypassverbindung eine geschwindigkeitsabhängige Entkopplung der Trennkolbenbewegung von der der Kolbenstangenbewegung erreicht wird. Praktisch wird damit bei kleinen und mittleren Kolbenstangengeschwindigkeit funktional eine Verlängerung des amplitudenabhängigen Dämpfkraftbereichs erreicht. Spätestens wenn der Trennkolben einen Boden 33 oder einen Deckel 35 des Gehäuses 19 erreicht hat, öffnen sich bei fortgesetzter Kolbenstangenbewegung die Dämpfventile 11; 15 oder 13; 17.

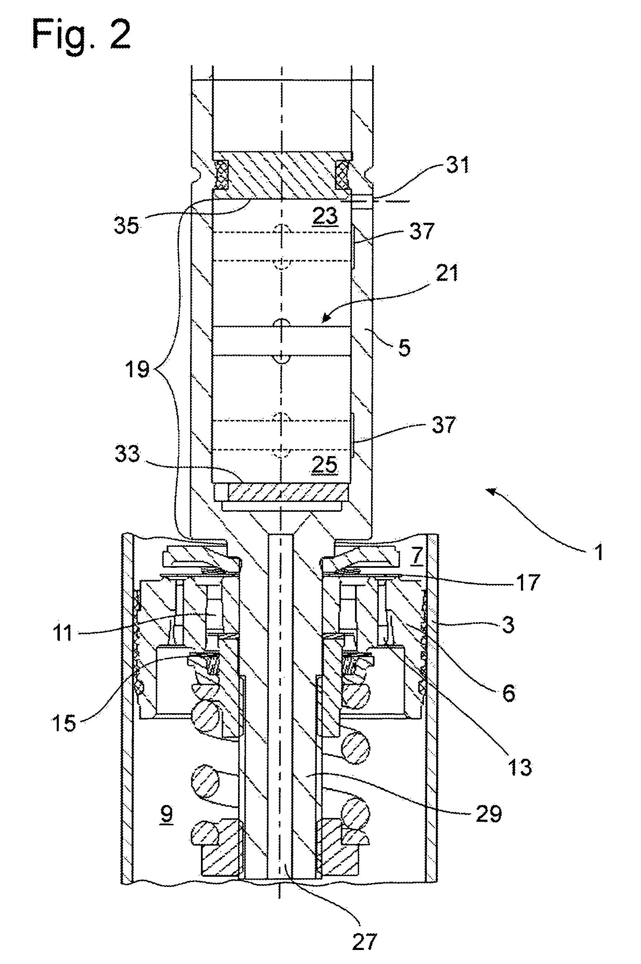

Die Variante nach Figur 2 entspricht im prinzipiellen Aufbau der Fig. 1. Abweichend kommen Nuten 37 im Endlagenbereich des Trennkolbens 21 zur Anwendung. Ausgehend von der gezeigten Mittellage bewegt sich der Trennkolben 21 bei einer Hubbewegung der Kolbenstange 5 in Abhängigkeit der Druckverhältnisse zwischen den beiden Arbeitskammern 23; 25 sofort, wobei die Bewegungsgeschwindigkeit des Trennkolbens von der Größe der Strömungsverbindung 27, der Anschlussöffnung 31 hydraulisch und einem parallel geschalteten, nicht dargestellten Voröffnungsquerschnitts mitbestimmt wird. Sobald der Trennkolben 21 in Überdeckung mit einer der Nuten 37 steht, siehe gestrichelte Darstellungen des Trennkolbens 21, kann ein Teil des Dämpfmediums über die Nuten 37 von einer Arbeitskammer 23; 25 in die andere strömen, so dass die Bewegungsgeschwindigkeit des Trennkolbens 21 sinkt, da aufgrund des geringeren Druckgefälles eine kleinere Druckkraft die Verschiebebewegung des Trennkolbens bewirkt. Eine kleinere Bewegungsgeschwindigkeit führt zu einer Minimierung der Anschlaggeräusche bei einem Kontakt des Trennkolbens 21 am Boden 33 oder am Deckel 35. Wenn der Trennkolben am Boden 33 oder am Deckel 35 anliegt, werden die Nuten 37 jeweils vom Trennkolben 21 verschlossen.

## Patentansprüche

1. Schwingungsdämpfer (1), umfassend einen mit einem Dämpfmedium gefüllten Zylinder (3), in dem eine Kolbenstange (5) mit einem Kolben (6) axial beweglich geführt ist, wobei der Kolben (6) den Zylinder (3) in einen kolbenstangenseitigen und einen kolbenstangenfernen Arbeitsraum (7; 9) unterteilt und jeweils einer der beiden Arbeitsräume (7; 9) für eine amplitudenselektive Dämpfkraft über Strömungsverbindungen (27; 31) mit jeweils einer Arbeitskammer (23; 25) in einem Gehäuse (19) verbunden ist, dessen besagte Arbeitskammern (23; 25) durch einen axial beweglichen Trennkolben (21) voneinander getrennt sind,
**dadurch gekennzeichnet,**
**dass** zwischen den beiden Arbeitskammern (23; 25) des Gehäuses (19) eine Bypassverbindung (37) vorliegt, die von dem Trennkolben (21) gesteuert wird.

2. Schwingungsdämpfer nach Anspruch 1,
**dadurch gekennzeichnet,**
**dass** die Bypassverbindung von mindestens einer Nut (37) innerhalb eines Kontaktbereichs zwischen dem Trennkolben (21) und dem Gehäuse (19) gebildet wird.

3. Schwingungsdämpfer nach Anspruch 2,
**dadurch gekennzeichnet,**
**dass** die Nut (37) innerhalb der Innenwandung des Gehäuses (19) ausgeführt ist.

4. Schwingungsdämpfer nach Anspruch 2,
**dadurch gekennzeichnet,**
**dass** die mindestens eine Nut (37) im Bereich einer Mittellage des Trennkolbens (21) ausgeführt ist.

5. Schwingungsdämpfer nach Anspruch 2,
**dadurch gekennzeichnet,**
**dass** die mindestens eine Nut (37) im Endlagenbereich des Trennkolbens (21) ausgeführt ist.

## Claims

1. Vibration damper (1), comprising a cylinder (3) which is filled with a damping medium and in which a piston rod (5) having a piston (6) is guided axially movably, the piston (6) subdividing the cylinder (3) into a piston-rod-side and a piston-rod-remote working space (7; 9), and in each case one of the two working spaces (7; 9) being connected, for an amplitude-selective damping force, via flow connections (27; 31) in each case to a working chamber (23; 25) in a housing (19), the said working chambers (23; 25) of which are separated from one another by an axially movable separating piston (21),
**characterized in that**
a bypass connection (37), which is controlled by the separating piston (21), is present between the two working chambers (23; 25) of the housing (19).

2. Vibration damper according to Claim 1,
**characterized in that**
the bypass connection is formed by at least one groove (37) within a contact region between the separating piston (21) and the housing (19).

3. Vibration damper according to Claim 2,
**characterized in that**
the groove (37) is made within the inner wall of the housing (19).

4. Vibration damper according to Claim 2,
**characterized in that**
the at least one groove (37) is made in the region of a mid-position of the separating piston (21).

5. Vibration damper according to Claim 2,
**characterized in that**
the at least one groove (37) is made in the region of the end position of the separating piston (21).

## Revendications

1. Amortisseur de vibrations (1), comprenant un cylindre (3) rempli d'un fluide d'amortissement, dans lequel est guidée de manière axialement déplaçable une tige de piston (5) avec un piston (6), le piston (6) divisant le cylindre (3) en un espace de travail (7 ; 9) du côté de la tige de piston et du côté éloigné de la tige de piston et à chaque fois l'un des deux espaces de travail (7 ; 9) étant connecté pour une force d'amortissement à amplitude sélective par le biais de connexions d'écoulement (27 ; 31) à une chambre de travail (23 ; 25) respective dans un boîtier (19), dont lesdites chambres de travail (23 ; 25) sont séparées l'une de l'autre par un piston de séparation (21) déplaçable axialement,
**caractérisé en ce**
**qu'**entre les deux chambres de travail (23 ; 25) du boîtier (19) existe une connexion de dérivation (37), qui est commandée par le piston de séparation (21).

2. Amortisseur de vibrations selon la revendication 1,
**caractérisé en ce que**
la connexion de dérivation est formée par au moins une rainure (37) à l'intérieur d'une zone de contact entre le piston de séparation (21) et le boîtier (19).

3. Amortisseur de vibrations selon la revendication 2, **caractérisé en ce que**
la rainure (37) est réalisée à l'intérieur de la paroi intérieure du boîtier (19).

4. Amortisseur de vibrations selon la revendication 2,
**caractérisé en ce que**
l'au moins une rainure (37) est réalisée dans la région d'une position centrale du piston de séparation (21).

5. Amortisseur de vibrations selon la revendication 2,
**caractérisé en ce que**
l'au moins une rainure (37) est réalisée dans la région des positions d'extrémité du piston de séparation (21).
